Europäisches Patentamt

European Patent Office

Office européen des brevets

(19)

(11) **EP 0 819 103 B1**

(12) **FASCICULE DE BREVET EUROPEEN**

(45) Date de publication et mention
de la délivrance du brevet:
**19.04.2000 Bulletin 2000/16**

(21) Numéro de dépôt: **97904498.9**

(22) Date de dépôt: **06.02.1997**

(51) Int Cl.[7]: **C03C 21/00**, C03C 23/00,
G11B 5/64, G11B 5/84

(86) Numéro de dépôt international:
**PCT/FR97/00233**

(87) Numéro de publication internationale:
**WO 97/29058 (14.08.1997 Gazette 1997/35)**

(54) **PROCEDE DE TRAITEMENT DE SUBSTRATS EN VERRE**

VERFAHREN ZUR BEHANDLUNG VON GLASSUBSTRATEN

METHOD FOR TREATING GLASS SUBSTRATES

(84) Etats contractants désignés:
**BE DE ES FR GB IT NL SE**

(30) Priorité: **07.02.1996 FR 9601484**

(43) Date de publication de la demande:
**21.01.1998 Bulletin 1998/04**

(73) Titulaire: **SAINT-GOBAIN VITRAGE**
**92400 Courbevoie (FR)**

(72) Inventeur: **RIFQI, Françoise**
**F-75017 Paris (FR)**

(74) Mandataire: **Le Cam, Stéphane Georges Elie et al**
**Saint-Gobain Recherche**
**39, quai Lucien Lefranc**
**93300 Aubervilliers Cédex (FR)**

(56) Documents cités:
**EP-A- 0 592 237          WO-A-96/11888**

- **DATABASE WPI Week 30 Derwent Publications Ltd., London, GB; AN 96-292416 XP002017839 & JP 08 124 153 A (NIPPON SHEET GLASS LTD) , 17 Mai 1996**
- **CHEMICAL ABSTRACTS, vol. 114, no. 4, 28 Janvier 1991 Columbus, Ohio, US; abstract no. 28896t, page 299; XP002017838 & JP 02 153 847 A (MURASE GLASS CO LTD) 13 Juin 1990**
- **DATABASE WPI Week 47 Derwent Publications Ltd., London, GB; AN 88-336490 XP002017840 & SU 1 395 597 A (BUTAEV A M) , 15 Mai 1988**
- **DATABASE WPI Week 43 Derwent Publications Ltd., London, GB; AN 82-91185e XP002017841 & JP 57 149 850 A (TOKYO SHIBAURA ELEC LTD) , 29 Juin 1989**
- **DATABASE WPI Week 14 Derwent Publications Ltd., London, GB; AN 95-102849 XP002017842 & JP 07 029 169 A (TECHNOLOGY AG KK) , 31 Janvier 1995**

**Description**

L'invention concerne un procédé de traitement de substrats en verre notamment utilisés comme mémoires « périphériques » dans le domaine de l'informatique.

Bien que l'invention ne se limite pas à cette application, elle sera décrite en référence à la réalisation de disques durs magnétiques.

Un disque dur magnétique se compose généralement d'un élément support façonné pour qu'il possède la forme d'un disque percé en son centre. Sur ce disque, peut notamment être déposée une série de couches minces magnétiques qui servent au stockage des données.

Les données sont enregistrées et lues à l'aide d'une ou plusieurs têtes de lecture qui sont placées au-dessus du disque alors que celui-ci est animé d'un mouvement de rotation. Pour obtenir une lecture performante des données, la tête de lecture doit approcher le disque au plus près ; on parle alors de « contact recording ». En effet, le signal détecté par la tête décroît exponentiellement quand son altitude augmente. De plus, les exigences actuelles nécessitent une densité de stockage de plus en plus importante. Cela se traduit par le stockage d'une information donnée sur une surface de plus en plus réduite. Pour assurer la lecture de données enregistrées de cette façon, la distance séparant le disque de la tête de lecture doit être de plus en plus réduite ; cette distance doit être inférieure à 300 Angströms.

Des substrats pour la réalisation de disques durs magnétiques sont notamment décrits dans le brevet US-5 316 844 ; il s'agit de substrats en aluminium. Ce document décrit également un aspect important de ces substrats ; ceux-ci ne doivent présenter qu'une très faible rugosité. Ce document indique des valeurs de rugosité dont le Rq, ou rugosité moyennée, est compris entre 100 et 300 Angströms. Les exigences actuelles, liées au besoin croissant de stockage et donc à une distance disque-tête de lecture de plus en plus faible, correspondent à un Rq inférieur à 20 Angströms. Le Rq est la rugosité moyennée, mesurée dans le cas présent, par un microscope à force atomique (AFM) sur un carré de 5x5 microns.

D'autre part, si les exigences concernant la capacité de mémoire des disques durs magnétiques sont de plus en plus importantes, une autre exigence qui peut sembler paradoxale concerne les dimensions de ces disques durs.

En effet, ces unités de stockage de données doivent être d'un encombrement le plus réduit possible et présenter une masse également réduite. Ces exigences sont liées d'une part au besoin croissant d'unités de stockage portables donc peu encombrantes et légères ; le développement d'outils informatiques portables et de logiciels nécessitant de grandes capacités de mémoire sont à la base de ce besoin. D'autre part, toujours pour augmenter les capacités de stockage de données, il est intéressant de pouvoir associer plusieurs disques durs magnétiques dans un espace donné et donc d'avoir des substrats présentant une épaisseur réduite.

Un substrat réalisé en aluminium ne peut avoir une épaisseur inférieure à 0,6 millimètre et à la fois présenter les qualités requises pour constituer un disque dur, notamment en terme de rigidité et de résistance à l'endommagement lors du choc de la tête de lecture contre le disque.

Pour remédier à ces inconvénients et pouvoir alléger et éventuellement réduire l'épaisseur d'un tel substrat, il a été proposé notamment dans la demande de brevet EP-579 399 de le réaliser en verre. Un tel substrat a notamment été réalisé à partir d'un ruban de verre obtenu selon la technique « float », ledit ruban étant transformé en feuille et enfin découpé et façonné en disques aux dimensions requises. Ceux-ci sont ensuite polis pour obtenir l'épaisseur et la rugosité désirées.

Il est apparu au cours d'essais que ces substrats en verre sont sujets à différents inconvénients et ne peuvent ainsi pas satisfaire à la réalisation de disques durs magnétiques.

En particulier, la surface de ces substrats en verre subit une déperdition importante d'alcalins et notamment de potassium ou de sodium et essentiellement de l'ion apporté par une trempe chimique. Or ces alcalins ont des effets néfastes notamment en présence d'humidité sur les couches magnétiques déposées sur les substrats. En effet, il apparaît que le relargage des alcalins dans ces couches entraîne la destruction des données enregistrées a plus ou moins court terme.

L'invention a pour but de fournir un procédé de traitement de substrats en verre permettant de pallier les inconvénients cités et conduisant à des substrats en verre présentant une bonne résistance chimique et notamment ne relargant des alcalins qu'en quantité non nuisible pour les couches magnétiques.

L'invention a également pour but un procédé conduisant à des substrats qui présentent une résistance mécanique, une planéité et une rugosité satisfaisantes pour constituer des éléments-supports pour réaliser des unités de stockage de données.

Ces buts sont atteints selon l'invention par un procédé de traitement de substrats en verre, comportant une étape de renforcement par échanges d'ions superficiels et une étape de désalcalinisation superficielle du substrat ultérieurement à ladite étape d'échange ionique.

L'étape de renforcement par échanges d'ions est avantageusement réalisée par trempe chimique. Cette étape permet notamment un renforcement mécanique de la surface ; elle autorise ainsi l'obtention d'une résistance mécanique satisfaisante notamment une résistance à la flexion, aux chocs et à l'écrasement par exemple de la tête de lecture. Une telle étape consiste à substituer des ions en surface du verre par d'autres présentant un volume différent pour modifier les contraintes en surface du substrat et ainsi ses propriétés mécaniques. Or le procédé selon l'invention conduit dans sa seconde étape à une élimination d'ions en surface dudit substrat. Il est ainsi surprenant pour l'homme du métier qu'une désalcalinisation du substrat en verre en vue de limiter, voire d'éliminer un relargage d'ions ultérieurement, permette de conserver les propriétés mécaniques obtenues par exemple par trempe chimique.

De préférence, la désalcalinisation est effectuée sur une profondeur du substrat inférieure à 1 micron. Selon cette réalisation préférée, la désalcalinisation est réalisée sur une épaisseur inférieure à celle sur laquelle la trempe chimique a précédemment été réalisée. Le substrat traité selon l'invention peut ainsi être utilisé comme support pour des couches magnétiques en vue de stockage de données sans risque que lesdites couches soient détériorées du fait du relargage d'alcalins en surface du substrat.

Selon une variante de l'invention, la désalcalinisation est réalisée par voie humide. Celle-ci peut notamment être réalisée par contact avec du chlorure d'aluminium $AlCl_3$ qui entraîne un lessivage de la surface du substrat en verre. Un tel traitement de désalcalinisation peut être effectué à une température proche de 100°C ; de telles conditions opératoires préviennent tous risques de relaxation des contraintes en surface du substrat.

Selon une autre variante de l'invention, la désalcalinisation est réalisée par sublimation d'un sulfate à la surface du substrat. De préférence, le traitement est réalisée avec le sulfate d'ammonium $(NH_4)_2 SO_4$.

Selon cette variante, on crée une couche superficielle de silice dense qui agit telle une barrière à l'égard de la diffusion des alcalins. La température lors de cette variante est avantageusement comprise entre 450 et 580°C lors de la désalcalinisation ; le temps de traitement lors de la désalcalinisation est avantageusement inférieur à 5 heures et de préférence compris entre 10 minutes et 3 heures.

Selon un mode de réalisation de l'invention, le renforcement par échange d'ions est obtenu par trempe chimique dans un bain de nitrate de potassium $KNO_3$ ou de dichromate de potassium $K_2 Cr_2 O_7$.

Selon un autre mode de réalisation de l'invention, le renforcement par échange d'ions est obtenu par trempe chimique dans un bain mixte tel que $KNO_3/AgNO_3$. Un bain mixte permet notamment un double échange ionique pouvant conduire à un effet alcali-mixte après échange, et donc à une amélioration de la résistance à l'attaque alcaline.

La température de trempe est avantageusement comprise entre 400 et 520°C. La durée est quant à elle avantageusement inférieure à 25 heures et de préférence inférieure à 20 heures.

Avantageusement, l'invention prévoit initialement, c'est-à-dire avant l'étape de renforcement par échange d'ions, une étape de polissage du substrat en verre. Cette étape peut être réalisée par des moyens mécaniques de façon à conduire notamment à l'épaisseur souhaitée du substrat et à une rugosité du substrat dont le Rq est inférieur à 20 Angströms et de préférence inférieur à 15 Angströms.

Dans une variante avantageuse de l'invention, il est également prévu une seconde étape de polissage qualifiée de « polissage de finition ». Cette étape a pour but d'amener le Rq, ou rugosité moyennée, à une valeur proche de 6 Angströms et de préférence inférieure à 5 Angströms. De telles valeurs de rugosité peuvent contribuer notamment à améliorer encore les capacités de stockage de données. Cette étape peut notamment être réalisée par des traitements chimiques par exemple par action de silice colloïdale, d'un fluide magnétique, ou d'oxyde de cérium.

Cette étape de « polissage de finition » peut être réalisée à différents stades du traitement. Une première réalisation de l'invention consiste à effectuer cette étape immédiatement après la première étape de polissage. D'un point de vue rugosité, une telle réalisation conduit à de bons résultats. Toutefois, l'étape de renforcement par échanges d'ions peut légèrement modifier l'état de surface du substrat et donc altérer les résultats concernant la rugosité. Par contre, les inventeurs ont su mettre en évidence que la désalcalinisation contribuait à améliorer la rugosité, notamment dans le cas d'un traitement avec du sulfate d'ammonium.

Une autre réalisation consiste à effectuer cette étape de « polissage de finition » à la fin du traitement selon l'invention. Cette étape étant la dernière, la rugosité obtenue par le traitement sera ensuite conservée. Par contre, il apparaît que selon cette variante de réalisation, l'étape de « polissage de finition » doit, par exemple dans le cas d'un traitement avec le chlorure d'aluminium, être réalisée sur une profondeur du substrat d'au plus 0,2 micron de façon notamment à ne pas détériorer la résistance hydrolytique obtenue suite au traitement de désalcalinisation précédemment réalisé.

Une réalisation préférée de l'invention consiste à effectuer l'étape de « polissage de finition » immédiatement après l'étape de renforcement par échanges d'ions et donc avant l'étape de désalcalinisation. Selon cette variante d'exécution, il est apparu que les résultats obtenus par l'étape de « polissage de finition » concernant notamment la rugosité sont satisfaisants. De plus, comme il l'a été dit précédemment, la désalcalinisation peut contribuer à l'amélioration de la rugosité et donc dans le cas présent ne fait que renforcer les résultats obtenus par l'étape de polissage de finition.

L'invention propose également un substrat en verre notamment obtenu selon l'une quelconque des variantes décrites précédemment du procédé de traitement selon l'invention, ledit substrat étant destiné à être utilisé comme support dans une unité de stockage de données, tel qu'un disque dur magnétique, par exemple pour un ordinateur portable.

Le substrat selon l'invention est en verre du type silico-sodo-calcique ayant subi une étape de renforcement par échange d'ions superficiels et se caractérise par le rapport de la teneur moyenne en $Na_2O$ dans une couche superficielle d'une épaisseur d'au moins 0,05 micron sur la teneur moyenne en $Na_2O$ dans la couche renforcée par échange ionique qui est inférieur à 40% et de préférence inférieur à 20% et/ou le rapport de la teneur moyenne en $K_2O$ dans une couche superficielle d'une épaisseur d'au moins 0,05 micron sur la teneur moyenne en $K_2O$ dans la couche renforcée par échange ionique qui est inférieur à 60% et de préférence inférieur à 40%.

De préférence le substrat présente un module de rupture moyen supérieur à 240 Mpa, et de préférence encore, supérieur à 300 MPa.

De préférence encore le substrat en verre possède une rugosité moyenne Rq inférieure à 5 Angströms.

Selon une variante préférée de l'invention, le substrat en verre a une matrice comprenant les constituants ci-après dans les proportions pondérales suivantes :

| | |
|---|---|
| $SiO_2$ | 45 - 65 % |
| $Al_2O_3$ | 0 - 20 % |
| $B_2O_3$ | 0 - 5 % |
| $Na_2O$ | 4 - 12 % |
| $K_2O$ | 3.5 - 12% |
| MgO | 0 - 8 % |
| CaO | 0 - 13 % |
| $ZrO_2$ | 0 - 20 % |

la somme des oxydes $SiO_2$, $Al_2O_3$ et $ZrO_2$ demeurant égale ou inférieure à 70% de ladite composition comprenant éventuellement les oxydes BaO et/ou SrO dans des proportions telles que :

$$11\% \leq MgO + CaO + BaO + SrO \leq 24\%,$$

et les oxydes alcalins étant introduits selon des pourcentages pondéraux tels que :

$$0,22 \leq Na_2O / Na_2O + K_2O \leq 0,60.$$

De préférence encore, la matrice verrière du substrat en verre comprend les constituants ci-après dans les proportions pondérales suivantes :

| | |
|---|---|
| $SiO_2$ | 50.50 % |
| $Al_2O_3$ | 11.85 % |
| CaO | 4.95 % |
| MgO | 4.25 % |
| $Na_2O$ | 5.25 % |
| $K_2O$ | 5.50 % |
| BaO | 5.75 % |
| SrO | 7.90 % |
| $ZrO_2$ | 4.05 % |

D'autres détails et caractéristiques avantageuses de l'invention ressortiront ci-après de la description d'un exemple de réalisation de l'invention et des essais réalisés.

La mise en oeuvre de l'invention a consisté en premier lieu à réaliser un substrat en verre aux dimensions requises pour constituer un support pour le stockage de données et plus précisément un disque dur destiné à équiper un ordinateur portable. Les substrats réalisés présentent ainsi la forme d'un disque dont les dimensions sont les suivantes :

- diamètre extérieur :     65 mm
- diamètre intérieur :     20 mm
- épaisseur :     0,635 mm

Ces substrats ont été obtenus par transformation d'une feuille de verre obtenue selon le procédé float par des techniques connues dans l'industrie verrière. Ces techniques consistent essentiellement en des étapes de découpe, perçage et façonnage des bords (ou « débordage »). D'autres méthodes peuvent permettre de réaliser ces substrats ; il peut s'agir d'une technique de pressage consistant à amener une paraison dans un moule où une presse lui donne la forme voulue. D'autres techniques peuvent encore être utilisées ; par exemple des techniques de laminage, d'étirage vers le bas, de tronçonnage de rondelles, ou toutes autres techniques connues de l'homme du métier. Suit alors l'étape de polissage par moyens mécaniques qui permet d'une part d'obtenir l'épaisseur et la planéité voulues et d'autre part une rugosité dont le Rq est inférieur à 20 Angströms.

Les substrats ont été réalisés à partir d'une feuille de verre dont la matrice comprend les constituants ci-après dans les proportions pondérales suivantes :

| | |
|---|---|
| $SiO_2$ | 50.50 % |
| $Al_2O_3$ | 11.85 % |
| CaO | 4.95 % |
| MgO | 4.25 % |
| $Na_2O$ | 5.25 % |
| $K_2O$ | 5.50 % |
| BaO | 5.75 % |
| SrO | 7.90 % |
| $ZrO_2$ | 4.05 % |

Il est intéressant de noter que la composition présente une température de strain point, c'est-à-dire une température inférieure de recuisson, élevée qui permet d'effectuer les traitements de trempe et de désalcalinisation à des températures relativement élevées, sans relaxer trop les contraintes de trempe. La température de strain point de cette composition est 583°C.

Le substrat ainsi obtenu après l'étape de polissage présente une rugosité inférieure à 20 Angströms et une variation de planéité sur la circonférence inférieure à 7 microns. La tolérance sur la planéité est importante car elle autorise des vitesses de rotation élevées du disque avec une tête de lecture très rapprochée sans risque de détérioration du disque et/ou de la tête de lecture.

Par contre, le substrat ainsi réalisé présente une résistance mécanique, et plus particulièrement un module de rupture, et une résistance chimique et notamment hydrolytique insuffisantes.

Des essais quantitatifs ont été réalisés afin d'optimiser la nature et les conditions opératoires des traitements de trempe et de désalcalinisation.

Un premier essai a consisté à comparer des traitements de désalcalinisation. Dans un premier temps, une trempe chimique des substrats est réalisée dans un bain de nitrate de potassium à 500°C pendant 3 heures. Puis trois types de traitement sont ensuite comparés : aucun traitement après la trempe chimique, un traitement de désalcalinisation à 100°C pendant 24 heures avec du chlorure d'aluminium $AlCl_3$, un traitement de désalcalinisation à 500°C pendant 1 heure avec du sulfate d'ammonium. On détermine ensuite dans chacun des cas la résistance hydrolytique des substrats. Pour cela, on effectue un test de relargage par immersion pendant 24 heures du substrat dans de l'eau déminéralisée à 80°C, suivie d'un dosage par torche à plasma des ions passés en solution, en particulier des alcalins mais également d'autres éléments de la matrice verrière.

Les résultats obtenus sont présentés dans le tableau ci-après ; les résultats sont exprimés en µg/disque.

| TRAITEMENTS | | Si | Na | K |
|---|---|---|---|---|
| **Trempe** | **Désalcalinisation** | | | |
| $KNO_3$ - 500°C - 3h | aucune | 155 | 0 | 86 |
| $KNO_3$ - 500°C - 3h | $AlCl_3$ - 100°C - 24 h | 46 | 0 | 4.7 |
| $KNO_3$ - 500°C - 3h | $(NH_4)_2 SO_4$ - 500°C - 1h | 9.5 | 0 | 0 |

Il s'avère, au vu de ces résultats, que les deux traitements de désalcalinisation peuvent être considérés comme satisfaisants ; toutefois, le traitement au sulfate d'ammonium semble plus intéressant car il garantit une pérennité de la résistance hydrolytique plus importante. De plus, le traitement par sulfate d'ammonium peut être effectué par exemple dans un four tunnel ce qui est favorable d'un point de vue industriel. Un autre avantage du traitement par sulfate d'ammonium, déjà énoncé précédemment, est qu'il permet d'améliorer encore la rugosité de surface du substrat.

D'autres essais ont été réalisés avec des conditions de traitement variables ; ces essais ont consisté à effectuer un traitement de trempe chimique dans un bain de $KNO_3$ suivi d'un traitement de désalcalinisation au sulfate d'ammonium en faisant varier les temps et températures de traitement. Ces essais permettent notamment de déterminer les conditions autorisant une désalcalinisation après la trempe chimique en conservant des propriétés mécaniques suffisantes.

Les essais réalisés sont présentés dans le tableau suivant :

| Traitement | Renforcement chimique | | Désalcalinisation | |
|---|---|---|---|---|
| | T°C | t(h) | T°C | t (h) |
| 1 | 450 | 24 | 450 | 3 |
| 2 | 450 | 24 | 550 | 0.5 |
| 3 | 480 | 7 | 480 | 1 |
| 4 | 480 | 7 | 520 | 0.75 |
| 5 | 480 | 7 | 550 | 0.5 |
| 6 | 500 | 3 | 550 | 0.5 |
| 7 | 500 | 3 | 520 | 0.75 |
| 8 | 500 | 3 | 480 | 1 |

Le tableau suivant exprime la résistance mécanique et plus précisément le module de rupture du substrat suite aux différents traitements. Les mesures de module de rupture sont obtenues par un essai mécanique consistant en une flexion annulaire ; le dispositif d'essai se compose d'une part d'un cylindre creux de diamètre 55 mm sur lequel on dépose le substrat de façon concentrique et d'autre part, d'un cylindre creux de diamètre 30 mm qui vient appuyer en flexion sur le substrat, le dernier cylindre étant également concentrique à l'égard des autres éléments. Les valeurs obtenues sont exprimées en Mpa. Les exigences actuelles sont un module de rupture moyen supérieur à 240 Mpa avec une valeur minimum supérieure à 150 Mpa.

Les résultats obtenus sont les suivants :

| TRAITEMENT | MODULE DE RUPTURE (MPa) |
|---|---|
| 1 | 309 |
| 2 | 352 |
| 3 | 381 |
| 4 | 342 |
| 5 | 327 |
| 6 | 315 |
| 7 | 317 |
| 8 | 349 |

Le second tableau présenté ci-dessous exprime la quantité moyenne de Na2O et K2O dans une couche superficielle de 0,05 micron en pourcentage par rapport à la quantité moyenne de ces mêmes éléments dans la couche renforcée par échange ionique. La couche de 0,05 micron correspond à l'épaisseur désalcalinisée. Ces résultats permettent de caractériser le substrat en verre après traitement selon l'invention, c'est-à-dire après un traitement de trempe chimique puis de désalcalinisation.

| TRAITEMENT | $Na_2O$ % | $K_2O$ % |
|---|---|---|
| 3 | 14 | 31 |
| 4 | 20 | 45 |
| 5 | 37 | 56 |
| 6 | 20 | 56 |

(suite)

| TRAITEMENT | Na$_2$O % | K$_2$O % |
|:---:|:---:|:---:|
| 7 | 8 | 37 |
| 8 | 7 | 38 |

Les résultats sont donc satisfaisants. De plus, les contraintes concernant la rugosité et la planéité du substrat sont également satisfaisantes. De même, une analyse surfacique montre un état de surface du substrat en bon état et une bonne homogénéité du traitement.

Par ailleurs, les essais réalisés ont pu mettre en évidence, tout d'abord qu'un traitement prolongé de désalcalinisation à 550°C peut diminuer les contraintes de surface obtenues par trempe chimique. De même, il a été mis en évidence qu'un traitement de désalcalinisation à 450°C d'une durée trop courte n'est pas suffisant pour obtenir une bonne homogénéité de surface. Les inventeurs ont ainsi su mettre en évidence que des résultats optima, c'est-à-dire une bonne résistance hydrolytique associé à un module de rupture satisfaisant, sont obtenus lorsque la température de traitement de désalcalinisation est proche de la température de strain point sans la dépasser et que le temps de traitement est suffisamment court pour ne pas trop relaxer les contraintes obtenues lors du traitement de trempe chimique. Un traitement de désalcalinisation par sulfate d'ammonium particulièrement intéressant consiste à le réaliser à 550°C pendant 10 minutes.

Concernant la rugosité, l'invention propose avantageusement une étape supplémentaire de « polissage de finition ». Des essais ont été réalisés pour déterminer la position de cette étape dans le processus de traitement. Un premier essai a consisté à réaliser cette étape de « polissage de finition » immédiatement après l'étape de polissage, c'est-à-dire avant les traitements de trempe et de désalcalinisation. La rugosité obtenue en surface du substrat selon cette réalisation est améliorée par rapport à un traitement sans cette étape. Toutefois, il s'avère que le traitement ultérieur de trempe atténue cette amélioration de la rugosité, le Rq est alors de l'ordre de 10 Angströms. Les valeurs de résistance mécanique et chimique sont quant à elles satisfaisantes.

Une autre réalisation consiste à réaliser cette étape de « polissage de finition » ultérieurement aux traitements de trempe et de désalcalinisation. Selon cette réalisation, les valeurs de rugosité obtenues sont nettement plus intéressantes ; le Rq obtenu est d'environ 5 Angströms. Par contre, l'étape de « polissage de finition » doit être réalisée sur une profondeur très faible (inférieure à 0,2 micron dans le cas d'un traitement de désalcalinisation avec du chlorure d'aluminium), pour ne pas diminuer la résistance hydrolytique obtenue après désalcalinisation. Cette contrainte peut rendre cette étape plus difficile à réaliser et en conséquence plus onéreuse.

Une dernière réalisation de l'invention consiste à effectuer cette étape de « polissage de finition » après l'étape de trempe et avant celle de désalcalinisation. Selon cette réalisation, la valeur de Rq est légèrement supérieure au cas précédent mais reste inférieure à 7 Angströms. L'étape de désalcalinisation étant la dernière, la résistance hydrolytique du substrat est satisfaisante. Concernant le module de rupture, celui-ci est également satisfaisant.

L'invention ainsi décrite permet donc de réaliser un substrat en verre destiné à être utilisé comme support pour le stockage de données ; ledit substrat ne présentant pas de risque pour la sauvegarde des informations dans le temps. De plus, celui-ci présente des caractéristiques physiques (rugosité, planéité) ainsi qu'une résistance mécanique satisfaisante pour l'application envisagée.

**Revendications**

**1.** Procédé de traitement d'un substrat en verre comportant une étape de renforcement par échanges d'ions superficiels, **caractérisé en ce qu'**on effectue une désalcalinisation superficielle du substrat ultérieurement à l'étape d'échange ionique.

**2.** Procédé selon la revendication 1, **caractérisé en ce que** la désalcalinisation est effectuée sur une profondeur inférieure à 1 micron.

**3.** Procédé selon l'une des revendications 1 ou 2, **caractérisé en ce que** la désalcalinisation est réalisée par voie humide, par exemple en présence d'AlCl$_3$.

**4.** Procédé selon l'une des revendications 1 ou 2, **caractérisé en ce que** la désalcalinisation est réalisée par sublimation d'un sulfate, tel que le sulfate d'ammonium (NH$_4$)$_2$ SO$_4$.

**5.** Procédé selon la revendication 4, **caractérisé en ce que** la désalcalinisation est effectuée à une température comprise entre 450 et 500°C.

**6.** Procédé selon l'une des revendications précédentes, **caractérisé en ce que** le renforcement par échange d'ions est réalisé dans un bain de $KNO_3$.

**7.** Procédé selon l'une des revendications 1 à 5, **caractérisé en ce que** le renforcement par échanges d'ions est réalisé dans un bain mixte tel que $KNO_3/AgNO_3$.

**8.** Procédé selon l'une des revendications précédentes, **caractérisé en ce qu'**avant l'étape de renforcement par échanges d'ions, on effectue un polissage du substrat en verre.

**9.** Procédé selon la revendication 8, **caractérisé en ce qu'**on effectue, ultérieurement à l'étape de polissage, une étape de « polissage de finition ».

**10.** Substrat en verre du type silico-sodo-calcique ayant subi une étape de renforcement par échange d'ions superficiels, **caractérisé en ce que** la teneur moyenne en $Na_2O$ dans une couche superficielle d'une épaisseur d'au moins 0,05 micron en pourcentage par rapport à la teneur moyenne en $Na_2O$ dans la couche renforcée par échange ionique est inférieur à 40% et de préférence inférieur à 20% et/ou la teneur moyenne en $K_2O$ dans une couche superficielle d'une épaisseur d'au moins 0,05 micron en pourcentage par rapport à la teneur moyenne en $K_2O$ dans la couche renforcée par échange ionique est inférieur à 60% et de préférence inférieur à 40%.

**11.** Substrat en verre selon la revendication 10, **caractérisé en ce qu'**il possède un module de rupture moyen supérieur à 240 Mpa, et de préférence supérieur à 300 MPa.

**12.** Substrat en verre selon l'une des revendications 10 ou 11, **caractérisé en ce qu'**il possède une rugosité moyennée Rq inférieure à 5 Angströms.

**13.** Substrat en verre selon l'une des revendications 10 à 12, **caractérisé en ce qu'**il est destiné à être utilisé comme support dans une unité de stockage de données.

**14.** Substrat en verre selon l'une des revendications 10 à 13, **caractérisé en ce que** la matrice comprend les constituants ci-après dans les proportions pondérales suivantes :

| | |
|---|---|
| $SiO_2$ | 50.50 % |
| $Al_2O_3$ | 11.85 % |
| CaO | 4.95 % |
| MgO | 4.25 % |
| $Na_2O$ | 5.25 % |
| $K_2O$ | 5.50 % |
| BaO | 5.75 % |
| SrO | 7.90 % |
| $ZrO_2$ | 4.05 % |

**Claims**

**1.** Process for the treatment of a glass substrate comprising a reinforcement stage using surface ion exchanges, characterized in that the ion exchange stage is followed by a surface dealkalization of the substrate.

**2.** Process according to claim 1, characterized in that dealkalization takes place over a depth less than 1 micron.

**3.** Process according to one of the claims 1 or 2, characterized in that dealkalization takes place by the wet route, e. g. in the presence of $AlCl_3$.

**4.** Process according to one of the claims 1 or 2, characterized in that dealkalization is performed by the sublimation of a sulphate, such as an ammonium sulphate $(NH_4)_2SO_4$.

5. Process according to claim 4, characterized in that dealkalization takes place at a temperature between 450 and 500°C.

6. Process according to one of the preceding claims, characterized in that ion exchange reinforcement takes place in a $KNO_3$ bath.

7. Process according to one of the claims 1 to 5, characterized in that ion exchange reinforcement takes place in a mixed bath such as of $KNO_3/AgNO_3$.

8. Process according to one of the preceding claims, characterized in that the glass substrate is polished before the ion exchange reinforcement stage.

9. Process according to claim 8, characterized in that a "finish polishing" stage takes place after the polishing stage.

10. Glass substrate of the soda-lime-silica glass type which has undergone a surface ion exchange reinforcement stage, characterized in that the average $Na_2O$ content in a surface layer having a thickness of at least 0.05 micron as a percentage compared with the average content of $Na_2O$ in the ion exchange-reinforced layer is below 40% and preferably below 20% and/or the average $K_2O$ content in a surface layer with a thickness of at least 0.05 micron as a percentage compared with the average $K_2O$ content in the ion exchange-reinforced layer is below 60% and preferably below 40%.

11. Glass substrate according to claim 10, characterized in that it has a mean modulus of rupture exceeding 240 MPa and preferably exceeding 300 MPa.

12. Glass substrate according to one of the claims 10 or 11, characterized in that it has an average roughness Rq below 5 Angstroms.

13. Glass substrate according to one of the claims 10 to 12, characterized in that it is intended for use as a support in a data storage unit.

14. Glass substrate according to one of the claims 10 to 13, characterized in that the matrix comprises the following constituents in the indicated weight proportions:

| | |
|---|---|
| $SiO_2$ | 50.50% |
| $Al_2O_3$ | 11.85% |
| CaO | 4.95% |
| MgO | 4.25% |
| $Na_2O$ | 5.25% |
| $K_2O$ | 5.50% |
| BaO | 5.75% |
| SrO | 7.90% |
| $ZrO_2$ | 4.05% |

**Patentansprüche**

1. Verfahren zur Behandlung eines Glassubstrats, welches eine Stufe der Verfestigung durch Ionenaustausch an der Oberfläche umfaßt, **dadurch gekennzeichnet, daß** nach der Ionenaustauschstufe an der Oberfläche eine Entalkalisierung des Substrats durchgeführt wird.

2. Verfahren nach Anspruch 1, **dadurch gekennzeichnet, daß** die Entalkalisierung über eine Tiefe von weniger als 1 Mikrometer durchgeführt wird.

3. Verfahren nach Anspruch 1 oder 2, **dadurch gekennzeichnet, daß** die Entalkalisierung auf nassem Wege, bei-

spielsweise in Gegenwart von $AlCl_3$, durchgeführt wird.

4. Verfahren nach Anspruch 1 oder 2, **dadurch gekennzeichnet, daß** die Entkalisierung durch Sublimieren eines Sulfats wie Ammoniumsulfat, $(NH_4)_2SO_4$, durchgeführt wird.

5. Verfahren nach Anspruch 4, **dadurch gekennzeichnet, daß** die Entkalisierung bei einer Temperatur von 450 bis 500 °C durchgeführt wird.

6. Verfahren nach einem der vorhergehenden Ansprüche, **dadurch gekennzeichnet, daß** die Verfestigung durch Ionenaustausch in einem $KNO_3$-Bad durchgeführt wird.

7. Verfahren nach einem der Ansprüche 1 bis 5, **dadurch gekennzeichnet, daß** die Verfestigung durch Ionenaustausch in einem Mischbad wie $KNO_3/AgNO_3$ durchgeführt wird.

8. Verfahren nach einem der vorhergehenden Ansprüche, **dadurch gekennzeichnet, daß** vor der Stufe der Verfestigung durch Ionenaustausch das Glassubstrat poliert wird.

9. Verfahren nach Anspruch 8, **dadurch gekennzeichnet, daß** nach der Polierstufe eine "Endpolierstufe" durchgeführt wird.

10. Substrat aus einem Glas vom Typ Kalk-Natron-Silicatglas, das einer Stufe der Verfestigung durch Ionenaustausch an der Oberfläche unterworfen worden ist, **dadurch gekennzeichnet, daß** der mittlere $Na_2O$-Gehalt einer Oberflächenschicht mit einer Dicke von mindestens 0,05 Mikrometern in Prozent in bezug auf den mittleren $Na_2O$-Gehalt der durch Ionenaustausch verfestigten Schicht weniger als 40 % und vorzugsweise weniger als 20 % und/oder der mittlere $K_2O$-Gehalt einer Oberflächenschicht mit einer Dicke von mindestens 0,05 Mikrometern in Prozent in bezug auf den mittleren $K_2O$-Gehalt der durch Ionenaustausch verfestigten Schicht weniger als 60 % und vorzugsweise weniger als 40 % beträgt.

11. Glassubstrat nach Anspruch 10, **dadurch gekennzeichnet, daß** es einen mittleren Bruchmodul von über 240 MPa und vorzugsweise über 300 MPa besitzt.

12. Glassubstrat nach Anspruch 10 oder 11, **dadurch gekennzeichnet, daß** es einen Mittenrauhwert $R_q$ von unter 5 Angström besitzt.

13. Glassubstrat nach einem der Ansprüche 10 bis 12, **dadurch gekennzeichnet, daß** es als Träger in einer Datenspeichereinheit verwendet wird.

14. Glassubstrat nach einem der Ansprüche 10 bis 13, **dadurch gekennzeichnet, daß** die Matrix folgende Bestandteile in nachstehenden Gewichtsanteilen enthält:

| | |
|---|---|
| $SiO_2$ | 50,50 % |
| $Al_2O_3$ | 11,85 % |
| CaO | 4,95 % |
| MgO | 4,25 5 |
| $Na_2O$ | 5,25 % |
| $K_2O$ | 5,50 % |
| BaO | 5,75 % |
| SrO | 7,90 % |
| $ZrO_2$ | 4,05 %. |